# EUROPEAN PATENT APPLICATION

(11) **EP 2 192 775 A1**
(43) Date of publication of application: **02.06.2010**
(21) Application number: 09169662.5
(22) Date of filing: 07.09.2009
(51) Int. Cl.: H04N 7/173, H04L 12/58, H04L 29/06

(54) **Image display device for providing content and method for providing content using the same**

(30) Priority: 26.11.2008 KR 20080118130
(71) Applicant: Samsung Electronics Co., Ltd., Suwon-si, Gyeonggi-do 442-742 (KR)
(72) Inventor: Kang, Chun-un, Seoul (KR); Kwak, Ki-won, Gyeonggi-do (KR); Kim, Ki-yong, Seoul (KR); Jung, Min-woo, Seoul (KR); Lee, Dae-hyun, Gyeonggi-do (KR)
(74) Representative: Brandon, Paul Laurence

(57) **Abstract**

An image display device for providing content and a method thereof. The image display device for providing content using a template, according to an exemplary embodiment of the present invention, comprises a content composition unit for composing content using a predefined template, and an agent for changing the composition of the content if an event occurs. Accordingly, the content is provided by various templates using a single template.

## Description

### CROSS-REFERENCE TO RELATED APPLICATIONS

This application claims priority under 35 U.S.C. § 119 from Korean Patent Application No. 2008-0118130, filed on November 26, 2008, in the Korean Intellectual Property Office, the disclosure of which is incorporated herein by reference in its entirety.

### BACKGROUND OF THE INVENTION

### 1. Field of the Invention

Apparatuses and methods consistent with the present invention relate to an image display device for providing content and a method for providing content thereof, and more particularly, to an image display device capable of providing content by various types of templates using a single temple and a method for providing content thereof.

### 2. Description of the Related Art

Content is most commonly provided to a user by using a static object. In other words, when a server transmits data such as an image, a text, and a graphic, the data is mapped and provided in a predetermined way, such as using a template.

Numerous efforts have been made to create new multimedia content using data such as an image, a text, and a graphic using a template.

If a template is used to provide content, it is possible to generate new content using data such as an image, a text, and a graphic and to reduce the cost of data by utilizing a server template. In addition, if a scenario template having a time base is used, the content can be applied on real-time basis.

However, because static content is generally used, and thus a story is sequentially developed, a user is always provided with the same results regardless of his or her usage pattern.

In particular, if the number of scenarios a user wants is "n", as many as "n" templates should be defined in advance. However, if another event suddenly occurs, it is impossible to generate a new combination of content.

Although using a template to provide content is suitable for one-way services such as facsimile, there have been attempts to apply this method to two-way services such as an Internet Protocol Television (IPTV). However, templates applied to the IPTV service have been focused on a service menu rather than on content itself.

### SUMMARY OF THE INVENTION

Exemplary embodiments of the present invention may address at least some of the above problems and/or disadvantages and other disadvantages not described above. Also, the present invention is not required to overcome the disadvantages described above, and an exemplary embodiment of the present invention may not overcome any of the problems described above.

Exemplary embodiments of the present invention provide an image display device capable of changing the composition of content after sensing the occurrence of an event, thereby providing content by various types of templates using a single temple and a method for providing content thereof.

An image display device for providing content using a template, according to an exemplary embodiment of the present invention, comprises a content composition unit which composes content using a predefined template and an agent which changes the composition of content when an event occurs.

The image display device may further comprise an event management unit which senses the occurrence of the event and notifies the agent of the occurrence of the event.

According to an exemplary embodiment of the invention, the agent comprises a software agent in which at least one object related to software is defined and a hardware agent in which at least one object related to hardware is defined.

At lease one possible event may be set in each object.

The event management unit may sense the occurrence of an event for each object, and notify an object corresponding to the event that occurred of the occurrence of the event.

The event may comprise a user event for interaction between users, an internal event for an event within the device, and an external event for an event outside the device.

The image display device may further comprise a display unit which displays content whose composition is changed by the agent.

A method for providing content using a template of an image display device, according to an exemplary embodiment of the present invention, comprises generating content using a predetermined template and changing the composition of the content when an event occurs.

At least one possible event for each object may be set in at least one predefined object related to software and at least one predefined object related to hardware.

The method for providing content may further comprise sensing the occurrence of an event for each object, and notifying an object corresponding to the event that occurred of the occurrence of the event.

The changing may comprise changing the composition of the content corresponding to the event that occurred by the object which is notified of the occurrence of the event.

The event may comprise a user event for interaction between users, an internal event for an event within the device, and an external event for an event outside the image.

The method for providing content may further comprise displaying content whose composition is changed.

A method for providing content using a template of an image display device, according to an exemplary embodiment of the present invention, comprises generating an object which changes the composition of the content, setting at least one possible event in the generated object, generating the content using a predefined template, calling an object corresponding to an event that occurs from the generated content when the event occurs, and changing the composition of the generated content from the called object.

The object may include at least one object related to software and at least one object related to hardware.

The event may comprise a user event for interaction between users, an internal event for an event within the device, and an external event for an event outside the image.

The method for providing content may further comprise generating a new event by combining the internal event and the external event, and setting the generated event in the object.

The method for providing content may further comprise displaying the content whose composition is changed.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a block diagram of an image display device according to an exemplary embodiment of the present invention;

FIG. 2 is a schematic view illustrating objects responsible for changing the composition of content according to an exemplary embodiment of the present invention; and

FIG. 3 is a flow chart illustrating a method of providing content using a template according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings, in which like reference numerals denote like elements.

The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

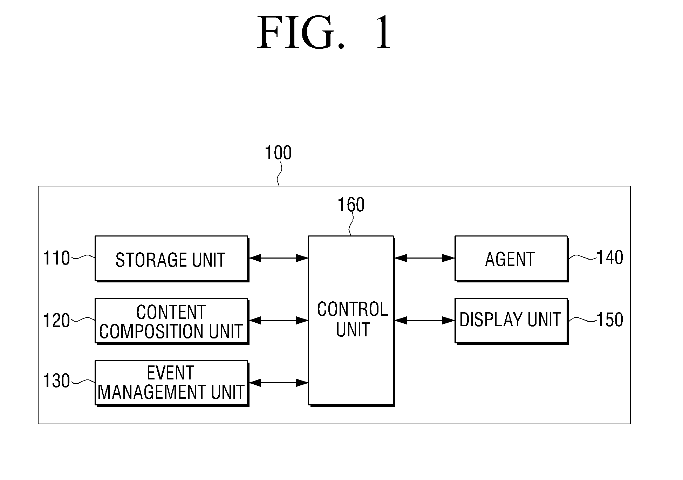

FIG. 1 is a block diagram of an image display device according to an exemplary embodiment of the present invention.

Referring to FIG. 1, the image display device 100 according to an exemplary embodiment of the present invention comprises a storage unit 110, a content composition unit 120, an event management unit 130, an agent 140, a display unit 150, and a control unit 160. The image display device 100 may be an Internet Protocol Television (IPTV) capable of providing two-way service.

The storage unit 110 stores a predefined template, which is a form, a framework, or a mold, serving as a guide. The template stored in the storage unit 110, according to an exemplary embodiment of the present invention, refers to a framework which includes areas designated to store data such as audio data, video data, text data, or image data.

The content composition unit 120 composes content using the predefined template. More specifically, the content composition unit 120 composes content by matching each piece of data such as audio data, video data, text data, or image data to its designated area using the template.

Since the content composed by the content composition unit 120 follows the format of the predefined template, even if data is changed, the entire composition remains unchanged. That is, the area where audio data is matched to, and the area where video data is matched to are the same.

The event management unit 130 senses the occurrence of an event and transfers the information to the agent 140, which is explained below. The agent 140 includes a plurality of objects, and the event management unit 130 senses the occurrence of an event for each object, and notifies each object corresponding to the sensed event of the occurrence of the event.

An event includes a user event for interaction between users, an internal event for an event within the image display device 100, and an external event for an event outside the image display device 100.

The user event is an event triggered by a user's selection signal received via a function key (not shown) or a remote control (not shown) in the image display device 100. The internal event may be an event such as disconnecting an antenna or changing a channel, and the external event may be an event for providing data in a different way from that of general data, such as providing breaking news.

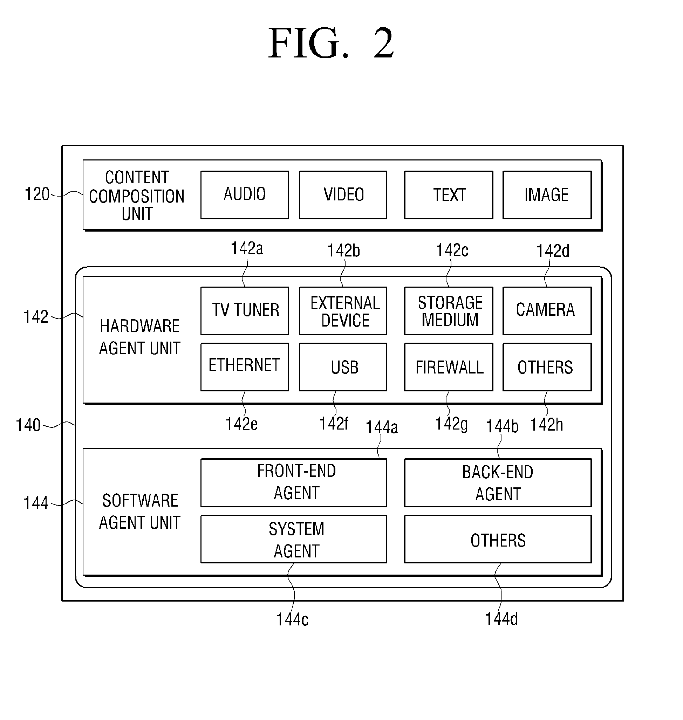

Once the agent 140 receives information regarding an event occurrence from the event management unit 130, the content composition unit 120 changes the composition of the content. The agent 140 includes a software agent in which at least one object is defined with regard to software and a hardware agent in which at least one object is defined with regard to hardware, as explained in detail below with reference to FIG. 2.

The display unit 150 displays content composed by the content composition unit 120 and content whose composition is changed by the agent 140. If the image display device 100 is an IPTV, the display unit 150 displays various information such as information regarding broadcasting and a user interface (UI).

The control unit 160 controls comprehensive functions of the image display device 100, and controls input/output of signals among the storage unit 110, the content composition unit 120, the event management unit 130, the agent 140, and the display 150.

The control unit 160 generates an object changing the composition of content and a load environment variable. In addition, the control unit 160 reads out a template from the storage unit 110 and provides it to the content composition unit 120 so that the content composition unit can compose content.

FIG. 2 is a schematic view illustrating objects responsible for changing the composition of content according to an exemplary embodiment of the present invention.

FIG. 2 illustrates a plurality of objects included in the content composition unit 120 and the agent 140. The content composition unit 120 includes native contents such as audio, video, text, and images, and composes content by matching such data with templates.

The agent 140 includes the hardware agent 142 and the software agent 144. The hardware agent 142 defines at least one object related to hardware, and the software agent 144 defines at least one object related to software. The agent 140 establishes an event for each object.

The hardware agent 142 may include a TV tuner-related object 142a, an external device-related object 142b, a storage medium-related object 142c, a camera-related object 142d, an Ethernet-related object 142e, a USB-related object 142f, a firewall-related object 142g, and an other object 142h. At least one event is set for each object.

The software agent 144 may include the front-end agent-related object 144a, the back-end agent-related object 144b, the system agent-related object 144c, and an other object 144d. At least one event is set for each object.

The front-end agent-related object 144a is an object related to a visible agent, and includes a user interface (UI) in order to provide a user with information. The front-end agent-related object 144a is related to the five human senses such as sight, touch, and hearing, and to information such as time, weather, and stock information.

The back-end agent-related object 144b is an object related to an invisible agent, and operates invisibly until an event occurs. Once an event occurs, the back-end agent-related object 144b causes the front-end agent related object 144a to trigger the event and report the event to a user. The examples include an investigation into a user's behavioral pattern, an alarm, and a reserved recording.

The system agent-related object 144c performs functions similar to the back-end agent-related object 144b but the functions are dependent on a system. Examples include tuner control such as handling a process when inserting memory into a USB port, changing channels, showing a current channel, and external input control.

Other object 144d may perform functions which are not performed by the front-end agent-related object 144a, the back-end agent-related object 144b, and the system agent-related object 144c.

Each of the front-end agent-related object 144a, the back-end agent-related object 144b, the system agent-related object 144c, and other object 144d may trigger an event, and may trigger an event in another object in order to perform a certain function. In addition, the objects may include a function for controlling the operation of the objects.

The objects change the composition of content composed by the content composition unit 120, and the change includes changing the location of inserted content, size, or a screen for providing information.

The plurality of objects included in the hardware agent 142 and the software agent 144 in FIG. 2 are mere examples corresponding to events which may possibly occur in the image display device 100, and objects are not limited to the examples. Objects may be added or deleted, and the number of objects is also not limited.

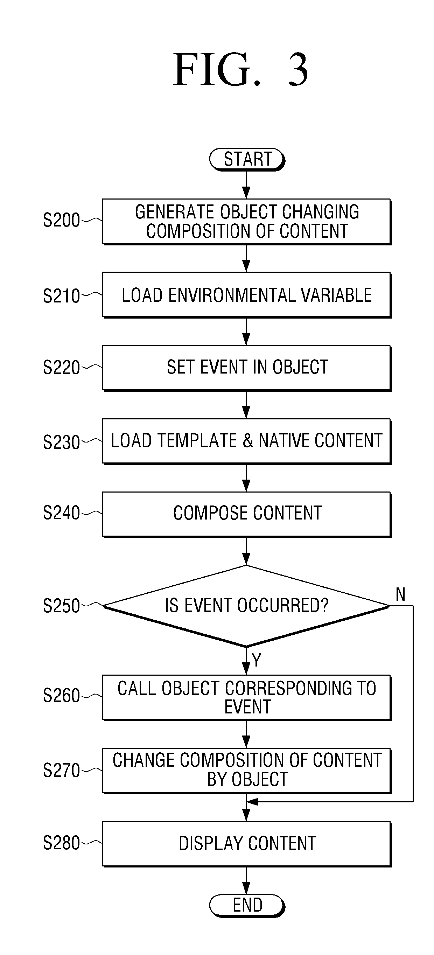

FIG. 3 is a flow chart illustrating a method of providing content using a template according to an exemplary embodiment of the present invention.

The method of providing content using a template according to an exemplary embodiment of the present invention is explained below with reference to FIGS. 1, 2, and 3.

The control unit 150 generates an object for changing the composition of content (S200). As illustrated in FIG. 2, an object may be an object included in the hardware agent 142 and/or the software agent 144.

The control unit 160 loads an environment variable of the image display device 100 (S210). The environment variable may include information which can be provided by the image display device 100, such as screen ratio, the number of colors, and the type of available external device.

The agent 140 sets an event for each object (S220). The hardware agent unit 142 sets an event for each of a TV tuner-related object 142a, an external device-related object 142b, a storage medium-related object 142c, a camera-related object 142d, an Ethernet-related object 142e, a USB-related object 142f, a firewall-related object 142g, and an other object 142h, and the software agent unit 144 sets an event for each of the front-end agent-related object 144a, the back-end agent-related object 144b, the system agent-related object 144c, and the other object 144d.

The control unit 160 reads out a template from the storage unit 110, and loads native contents such as audio, video, text, and images from the storage unit 110 or an external device (S230).

The content composition unit 120 composes content by matching data such as audio data, video data, text data, and image data with the templates which are read out by the storage unit 110 (S240).

If the event management unit 130 senses the occurrence of an event (S250-Y), the event management unit 130 calls an object corresponding to the event that occurred (S260). The event management unit 130 may call the object directly, or may call the object indirectly via the hardware agent 142 or the software agent 144 in which the object is included.

The object which is called according to the occurrence of an event changes the previously-composed composition of the content according to the type of event (S270). When the composition of the content is changed, the display unit 150 displays the content whose composition is changed (S280).

As such, if an event occurs, each object changes the composition of content, making it possible to provide content by various types of templates using a single temple.

An exemplary embodiment of the present invention relates to an event-based story template, and provides newly-composed content by changing the composition of the content according to the occurrence of event. Since there is no need to provide every template for each scenario to a user, a burden on a server or the image display device 100 can be reduced.

While the present invention has been particularly shown and described with reference to exemplary embodiments thereof using specific terms, the embodiments and terms have been used to explain the present invention and should not be construed as limiting the scope of the present invention defined by the claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention. Also, exemplary embodiments of the present invention may be embodied as computer-readable codes on a computer-readable recording medium.

The computer-readable recording medium is any data storage device that can store data which can be thereafter read by a computer system. Examples of the computer-readable recording medium include read-only memories (ROMs), random-access memories (RAMs), CD-ROMs, magnetic tapes, floppy disks, and optical data storage devices. The computer-readable recording medium can also be distributed over network coupled computer systems so that the compute readable code is stored and executed in a distributed fashion.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image display device for providing content using a template, comprising:
a content composition unit which composes content using a predefined template; and
an agent which changes the composition of the content when an event occurs.

2. The image display device for providing content using a template as claimed in claim 1, further comprising:
an event management unit which senses the occurrence of the event and notifies the agent of the occurrence of the event.

3. The image display device for providing content using a template as claimed in claim 2, wherein the agent comprises:
a software agent in which at least one object related to software is defined; and
a hardware agent in which at least one object related to hardware is defined.

4. The image display device for providing content using a template as claimed in claim 3, wherein at least one possible event is set in each object.

5. The image display device for providing content using a template as claimed in claim 3, wherein the event management unit senses the occurrence of the event for each object, and notifies an object corresponding to the event that occurred of the occurrence of the event.

6. The image display device for providing content using a template as claimed in claim 1, wherein the event comprises a user event for interaction between users, an internal event for an event within the device, and an external event for an event outside the device.

7. The image display device for providing content using a template as claimed in claim 1, further comprising:
a display unit which displays content whose composition is changed by the agent.

8. A method for providing content using a template of an image display device, comprising:
generating content using a predetermined template; and
changing composition of the content if an event occurs.

9. The method for providing content as claimed in claim 8, wherein at least one possible event for each object is set in at least one predefined object related to software and at least one predefined object related to hardware.

10. The method for providing content as claimed in claim 9, further comprising:
sensing the occurrence of the event for each object, and notifying an object corresponding to the event that occurred of the occurrence of the event.

11. The method for providing content as claimed in claim 10, wherein the changing comprises changing the composition of the content corresponding to the event that occurred by the object which is notified of the occurrence of the event.

12. The method for providing content as claimed in claim 8, wherein the event comprises a user event for interaction between users, an internal event for an event within the device 100, and an external event for an event outside the device.

13. The method for providing content as claimed in claim 8, further comprising:
displaying the content whose composition is changed.
